# EUROPÄISCHE PATENTSCHRIFT

(11) **EP 1 290 535 B1**
(45) Veröffentlichungstag und Bekanntmachung des Hinweises auf die Patenterteilung: **26.11.2003**
(21) Anmeldenummer: 01944966.9
(22) Anmeldetag: 31.05.2001
(51) Int. Cl.: G06F 1/00

(54) **VERFAHREN UND ANORDNUNG ZUR ABSICHERUNG EINES MENSCH-MASCHINE-DIALOGS**
METHOD AND ARRANGEMENT FOR SECURING A MAN-MACHINE DIALOGUE
PROCEDE ET AGENCEMENT DE SECURISATION D'UN DIALOGUE HOMME-MACHINE

(30) Priorität: 02.06.2000 DE 10027051
(43) Veröffentlichungstag der Anmeldung: 12.03.2003
(73) Patentinhaber: T-Mobile Deutschland GmbH, 53227 Bonn (DE)
(72) Erfinder: MOHRS, Walter, 53123 Bonn (DE); SPORN, Ulrich, 53227 Bonn (DE)
(74) Vertreter: Riebling, Peter, Dr.-Ing.
(86) Internationale Anmeldenummer: DE0102065
(87) Internationale Veröffentlichungsnummer: WO01092995

(56) Entgegenhaltungen:
- WO-A-98/19243
- US-A- 5 664 099
- US-A- 5 822 435

## Beschreibung

Die Erfindung betrifft ein Verfahren und eine Anordnung zur Absicherung eines Mensch-Maschine-Dialogs nach dem Oberbegriff der unabhängigen Patentansprüche.

Ein derartiger Mensch-Maschine-Dialog wird z.B. bei digitalen Signaturverfahren durchgeführt. Digitale Signaturen finden überall dort Anwendung, wo es um Authentizität und Integrität elektronischer Dokumente geht, z. B. in den Bereichen des elektronischen Handels z.B. eCommerce, Banking, Brokerage etc. oder des öffentlichen Rechtes, z.B. notarielle Beglaubigung.
Zur Durchführung eines digitalen Signaturprozesses benötigt man ein geeignetes Endgerät, wie z.B. ein spezielles Terminal oder einen Personal Computer, mit dem ein Dialog zwischen einem Benutzer und mindestens einer auf einem Endgerät ausführbaren Anwendung möglich ist, wobei eine Kommunikation zwischen Benutzer und Anwendung über Eingabekanäle und Ausgabekanäle des Endgeräts erfolgt. Auch die im Mobilfunk verwendeten modemen Endgeräte erfüllen im wesentlichen alle Voraussetzungen für digitale Signaturverfahren. Sie sind mit alphanumerischem Display und Tastatur ausgestattet und verfügen implizit über einen Chipkartenleser.

Zur Durchführung einer digitalen Signatur wird das zu signierende Dokument auf einem geeigneten Übertragungsweg, z.B. im Mobilfunk über das Mobilfunknetz, von einer anfordernden Einheit, z.B. einem Server, an ein geeignetes Endgerät bzw. an eine Signiervorrichtung im Endgerät oder auf der Chipkarte gesendet. Das Endgerät bzw. die Signiervorrichtung im Endgerät oder auf der Chipkarte bringen das zu signierende Dokument auf dem Display des Endgerätes zur Anzeige und fordern den Benutzer auf, per Tastatur den Signiervorgang auszulösen. Zur Authentifikation fordert die Signiervorrichtung vom Benutzer die Eingabe einer Signatur-PIN auf der Tastatur. Nach Eingabe der richtigen Signatur-PIN führt die Signiervorrichtung die Signatur aus und sendet sie mit dem Dokument an die signaturanfordemde Einheit zurück. Es ist auch denkbar, dass die Signiervorrichtung (bzw. das Endgerät) über biometrische Verfahren, z.B. Fingerabdruck, Spracheingabe etc, die Authentizität des Benutzers sicherstellt.

Da der Signatur-Dialog, d.h. die Anzeige des zu signierenden Dokumentes, die Aufforderung zur Bestätigung, Aufforderung zur Eingabe der Signatur-PIN in einen übergeordneten anwendungsspezifischen Dialog eingebettet ist, der einer anderen Quelle, also nicht der Signiervorrichtung, entstammt und/oder gesteuert wird, z.B. WML-Deck, und da es weiterhin mehrere Quellen für Anzeigen auf dem Display gibt, z.B. andere, parallel laufende Anwendungen, Bedienerführung des Endgerätes etc, kann der Benutzer nicht sicher sein, ob die Anzeige des zu signierenden Dokumentes authentisch ist und die Abfrage der Signatur-PIN authentisch ist, d.h. tatsächlich von der Signiervorrichtung kommt.
Es ist für den Benutzer grundsätzlich nicht erkennbar, von wem die auf dem Display des Endgerätes angezeigten Daten stammen. Die Anwendungen insbesondere bei WAP (WML-Decks) sind in der Regel anonym, d.h. werden nicht vom Netzbetreiber oder einer anderen Instanz überprüft und zertifiziert. Damit ist es zum Beispiel möglich, dass fremde Applikationen den Signatur-Dialog der Signiervorrichtung nachstellen, um so an die Signatur-PIN des Benutzers zu gelangen.

Die Dokumente WO 98/19243 A2 und US 5 822 435 A offenbaren Verfahren und Vorrichtungen zur Behandlung von sicherheitskritischen Vorgängen in Datenverarbeitungsanlagen. Neben den üblichen Elementen einer Datenverarbeitungsanlage, wie Prozessor und Eingabe- / Ausgabeeinheiten, umfassen die beschriebenen Vorrichtungen spezielle Sicherheitseinrichtungen. So ist bei der WO 98/19243 A2 vorgesehen, dass die Sicherheitseinrichtung bei der Durchführung aller sicherheitsrelevanten Vorgänge die Kontrolle über die Eingabe- und Ausgabeeinheiten übernimmt. Bei der US 5 822 435 A wird die Sicherheitseinrichtung zwischen den Prozessor und die Eingabe- und Ausgabeeinheiten geschaltet und sorgt für eine Verschlüsselung der übertragenen Daten.
Bei den bekannten Verfahren und Vorrichtungen ist es jedoch nicht vorgesehen, dass die Eingabekanäle und/oder Ausgabekanäle genau einer Anwendung zur Zeit exklusiv zugeordnet werden.

Die Aufgabe der Erfindung besteht darin, ein Verfahren und eine Anordnung zur Absicherung eines Mensch-Maschine-Dialogs anzugeben, das es dem Benutzer ermöglicht, die Quelle der Display-Information sicher identifizieren und steuern und/oder die ordnungsgemäße Weiterleitung einer eingegebenen Informationen kontrollieren zu können.

Diese Aufgabe wird durch die Merkmale der unabhängigen Patentansprüche gelöst.

Die Erfindung beruht darauf, dass die Eingabekanäle und/oder Ausgabekanäle des Endgerätes, zusammen oder getrennt, mittels einer Umschalteinrichtung wahlweise so schaltbar sind, dass sie einer bestimmten Anwendung exklusiv zur Verfügung stehen.

Dadurch kann erfindungsgemäß sichergestellt werden, dass
1) die Ausgaben eines Endgerätes, d.h. die auf dem Display angezeigten Daten und Texte
   - von einer dem Benutzer bekannten und vertrauten Quelle (Source) stammen bzw.
   - dem Benutzer vom Endgerät zuverlässig die Informationsquelle angezeigt wird bzw.
   - der Benutzer die Quelle selbst identifizieren kann
   und
2) die Eingaben am Endgerät (z.B. zur Authentifikation des Benutzers gegenüber einer Signiervorrichtung, z.B. mittels Signatur-PIN (Tastatur), Fingerabdruck (Sensor) Spracheingabe (Sprachanalyse-Modul)
   - nur an ein vom Benutzer vorgebbares vertrautes Ziel weitergeleitet werden bzw.
   - nur an ein vom Endgerät zuverlässig angezeigtes Ziel weitergeleitet werden

Durch die Erfindung ist es also möglich, sicherzustellen, dass ein Benutzer einen Dialog, z.B. einen Signatur-Dialog, ausschließlich mit einer bestimmten Anwendung, z.B. einer Signiervorrichtung, führt. Das heißt, der Benutzer kann sicher sein, dass die auf dem Display angezeigten Daten von der Signiervorrichtung stammen und dass seine Eingaben ausschließlich an die Signiervorrichtung weitergeleitet werden.

Vorteilhafte Ausgestaltungen und Weiterbildungen der Erfindung sind in den abhängigen Patentansprüchen angegeben.

Erfindungsgemäß ist es möglich, dass verschiedene Anwendungen jeweils alternativ an die Eingabe-/Ausgabekanäle exklusiv ankoppelbar sind. Das heißt der Benutzer kann wahlweise die Eingabe-/Ausgabekanäle des Endgeräts genau einer Anwendung zur Zeit exklusiv zuordnen.

Die Umschaltung der Eingabe-/Ausgabekanäle auf eine Anwendung kann mechanisch, elektronisch oder mittels Software erfolgen. Die Umschalteinrichtung umfasst dazu vorzugsweise einen mechanischen, elektronischen oder softwaregesteuerten Schalter

In einer bevorzugten Ausführungsform wird die Umschaltung auf eine bestimmte Anwendung durch eine definierte Taste am Endgerät oder einen Eingabe-Code aktiviert. Es kann z.B. jeder vom Benutzer auswählbaren Anwendung eine spezielle Taste zugeordnet werden.

Im Falle der Verwendung einer Taste erfolgt die Umschaltung durch den Benutzer. Die Umschaltung kann aber auch automatisch durch das Endgerät erfolgen und durch spezielle Signale oder Befehle ausgelöst werden.

In einer bevorzugten Ausgestaltung der Erfindung wird die Umschaltung auf eine bestimmte Anwendung dem Benutzer durch ein optisches und/oder akustisches Signal eindeutig angezeigt. Sind mehrere Anwendungen wahlweise schaltbar, so wird jeder Anwendung vorzugsweise ein eigenes optisches oder akustisches Signal zugeordnet.

Gleichzeitig mit der Umschaltung der Eingabe-/Ausgabekanäle kann die zugehörige Anwendung gestartet werden.

Zur weiteren Erhöhung der Sicherheit für den Benutzer ist vorgesehen, dass die Quelle der Daten des Ausgabekanals durch einen zwischen Quelle und Benutzer vereinbarten geheimen Code identifizierbar ist. Bei jeder Anzeige von Daten auf dem Display des Endgeräts wird zur Authentifizierung der Quelle gleichzeitig der geheime Code angezeigt.

Die ausführbaren Anwendungen können in einer im Endgerät verwendbaren Chipkarte oder im Endgerät selbst enthalten sein.

Nachfolgend wird die Erfindung anhand eines Ausführungsbeispiels unter Verwendung einer Zeichnungsfigur näher erläutert. Aus der Zeichnung und ihrer Beschreibung ergeben sich weitere Merkmale, Vorteile und Anwendungen der Erfindung.

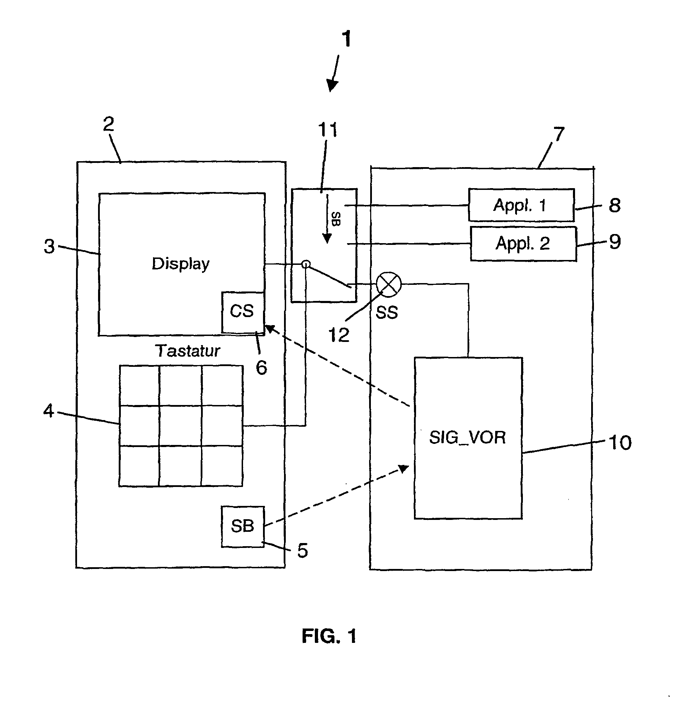

Figur 1 zeigt schematisch ein Endgerät 1 zur Ausführung eines digitalen Signaturdialogs als eine von mehreren verfügbaren Anwendungen. Das Endgerät 1 umfasst ein Eingabe- und Ausgabeteil 2 mit einer Tastatur 4 und einem Display 3 sowie ein Funktions- und Anwendungsteil 7, welches mehrere Anwendungen 8, 9, 10 beinhaltet. Femer umfasst das Endgerät 1 eine Umschalteinrichtung 11, mittels welcher die Ein- und Ausgabeeinheiten 3, 4 wahlweise und exklusiv auf eine der Anwendungen 8, 9, 10 geschaltet werden können. Eingabe- und Ausgabeteil 2 sowie Funktions- und Anwendungsteil 7 sind üblicherweise in einem gemeinsamen Gehäuse (nicht dargestellt) untergebracht.

Im folgenden werden die Anordnung und das Verfahren am Beispiel der digitalen Signatur erläutert, wobei sowohl Quelle als auch Ziel der Daten des Signaturdialogs die Signiervorrichtung 10 innerhalb des Endgerätes 1 ist. Die Signiervorrichtung 10 kann auch auf eine mit dem Endgerät zu verwendenden Chipkarte (nicht dargestellt) enthalten sein.

Der Signatur-Dialog zwischen dem Benutzer des Endgeräts 1 und der Signiervorrichtung 10 kann aus den folgenden Schritten bestehen:
Zunächst wird das von einer anfordernden, externen Stelle übermittelte, zu signierende Dokument dem Benutzer auf dem Display 3 des Endgerätes 1 in irgendeiner Weise zur Anzeige gebracht, entweder direkt als Text oder als Referenz auf einen Text oder als Icon bzw. Bild.
Nun wird der Benutzer aufgefordert, den Text zu bestätigen oder zurückzuweisen. Dazu wird der Benutzer aufgefordert, sich gegenüber der Signiervorrichtung 10 zu Authentifizieren, z.B. durch Eingabe einer Signatur-Pin über die Tastatur 4. Nachfolgend prüft die Signiervorrichtung 10 die eingegebene Signatur-PIN, signiert das Dokument, speichert evtl. die Signatur und stößt das Versenden der Signatur an die anfordernde Stelle an.
Es ist möglich, in der Signiervorrichtung 10 oder im Endgerät 1 den Signaturdialog aufzuzeichnen und die Dokumente und Signaturen für evtl. spätere Nachweisführung zu speichern.

Erfindungsgemäß werden die Eingabe-/Ausgabekanäle, d.h. die Tastatur 4 und das Display 3 des Endgeräts 1 der Signiervorrichtung 10 exklusiv dadurch zur Verfügung gestellt, dass eine direkt geschaltete Verbindung (Signierschaltung) zwischen Eingabe-/Ausgabekanälen 3, 4 und der Signiervorrichtung 10 hergestellt wird, wobei die Schalterstellung für den Benutzer erkennbar ist. Dazu umfasst das Endgerät eine Umschalteinrichtung 11, die dafür sorgt, dass ausschließlich eine Anwendung, hier die Signiervorrichtung 10, über die Eingabe-/Ausgabekanäle 3, 4 des Endgeräts 1 exklusiv mit dem Benutzer kommunizieren kann.

In einer bevorzugten Ausführungsform wird die Aktivierung der Umschaltung in die Signierstellung durch die Eingabe eines Tastatur-Codes erreicht, im einfachsten Fall durch Betätigen einer speziellen Signier-Taste 5 (Signatur-Button) am Endgerät 1, wobei die Betätigung der Taste 5 die Umschalteinrichtung 11 steuert. Nach Betätigung des Signatur-Buttons 5 werden Tastatur 4 und Display 3 des Endgerätes 1 fest und exklusiv der Signiervorrichtung 10 zugeordnet, d.h. jede Eingabe über die Tastatur 4 geht an die Signiervorrichtung 10 und jede Anzeige im Display 3 kommt von der Signiervorrichtung 10. Dies ist in der Zeichnungsfigur durch die Zuordnungspfeile dargestellt.

Anstelle einer manuellen Umschaltung kann die Umschaltung in die Signierstellung auch automatisch durch das Endgerät 1 ausgelöst werden.

Für die technische Realisierung der Umschaltung am Endgerät 1 sind verschiedene Ausführungsformen möglich. Die Umschalteinrichtung 11 ist im einfachsten Fall ein Schalter, der z.B. galvanisch, elektronisch oder über Software geschaltet wird. Der Benutzer muss in jedem Fall sichergehen, dass die für ihn sichtbare Umschaltung im Endgerät 1 entsprechend umgesetzt wird.

Ein weiterer Bestandteil der Erfindung ist, dass die exklusive Zuordnung der Eingabe-/Ausgabekanäle, also von Tastatur 4 und Display 3 zur Signiervorrichtung 10 dem Benutzer durch ein spezielles, exklusiv für diese Zuordnung verwendetes Signatur-Signal 12 optisch bzw. akustisch angezeigt wird. Dieses Signatur-Signal ist im einfachsten Fall die Schalterstellung eines mechanischen Umschalters. Es könnte in zweckmäßiger Weise auch eine Beleuchtung oder ein Blinken des Signatur-Buttons oder eines Anzeige-Elements des Displays 3 sein.

Weiterer Bestandteil der Erfindung ist die Möglichkeit des Benutzers, die Quelle der Daten des Ausgabekanals zu identifizieren dadurch, dass zwischen Quelle und Benutzer ein geheimes Code-Signal 6 vereinbart wird, das z.B. bei jeder Anzeige auf dem Display 3 erscheint. Ein vereinbarter geheimer Code zwischen Benutzer und Signiervorrichtung kann z.B. die Zeichenfolge 1 F7D sein. Bei der Aufforderung zur Eingabe der Signatur-PIN erscheint auf den Display:
"Bitte bestätigen Sie den Signiervorgang durch Eingabe Ihrer Signatur- PIN. Auth.: 1F7D
Der Benutzer erkennt am Authentifikationscode 1 F7D, dass die Daten von der Signiervorrichtung kommen.

### Zeichnungslegende

- 1: Endgerät
- 2: Ein-/Ausgabeteil
- 3: Display
- 4: Tastatur
- 5: Signatur-Button
- 6: Code-Signal

- 7: Funktions-/Anwendungsteil
- 8: erste Anwendung
- 9: zweite Anwendung
- 10: Signiervorrichtung (dritte Anwendung)
- 11: Umschalteinrichtung
- 12: Signatur-Signal

## Patentansprüche

1. Verfahren zur Absicherung eines Mensch-Maschine-Dialogs zwischen einem Benutzer und mindestens einer auf einem Endgerät ausführbaren Anwendung, wobei eine Kommunikation zwischen Benutzer und Anwendung über Eingabekanäle und Ausgabekanäle des Endgeräts erfolgt,
**dadurch gekennzeichnet,**
**dass** die Eingabekanäle (4) und/oder Ausgabekanäle (3) des Endgerätes (1), zusammen oder getrennt, wahlweise mittels einer Umschalteinrichtung im Endgerät so schaltbar sind, dass sie einer Anwendung (8; 9; 10) exklusiv zur Verfügung stehen, wobei die Eingabe-/Ausgabekanäle (3, 4) nur einer Anwendung (8; 9; 10) zur Zeit exklusiv zugeordnet werden.

2. Verfahren nach Anspruch 1, **dadurch gekennzeichnet, dass** verschiedene Anwendungen (8; 9; 10) jeweils alternativ an die Eingabe-/Ausgabekanäle (3, 4) exklusiv ankoppelbar sind.

3. Verfahren nach einem oder mehreren der vorhergehenden Ansprüche, **dadurch gekennzeichnet, dass** die Umschaltung mechanisch, elektronisch oder mittels Software durchgeführt wird.

4. Verfahren nach einem oder mehreren der vorhergehenden Ansprüche, **dadurch gekennzeichnet, dass** die Umschaltung durch eine definierte Taste (5) am Endgerät (1) oder einen Eingabe-Code aktivierbar ist.

5. Verfahren nach einem oder mehreren der vorhergehenden Ansprüche, **dadurch gekennzeichnet, dass** die Umschaltung manuell durch den Benutzer oder automatisch durch das Endgerät (1) erfolgt.

6. Verfahren nach einem oder mehreren der vorhergehenden Ansprüche, **dadurch gekennzeichnet, dass** die Umschaltung auf eine bestimmte Anwendung (8; 9; 10) dem Benutzer durch ein optisches und/oder akustisches Signal (12) eindeutig angezeigt wird.

7. Verfahren nach einem oder mehreren der vorhergehenden Ansprüche, **dadurch gekennzeichnet, dass** gleichzeitig mit der Umschaltung eine bestimmte Anwendung (8; 9; 10) gestartet wird.

8. Verfahren nach einem oder mehreren der vorhergehenden Ansprüche, **dadurch gekennzeichnet, dass** die Anwendung (10) eine Signiervorrichtung ist, die in einer mit dem Endgerät verwendbaren Chipkarte oder im Endgerät (1) selbst vorhanden ist.

9. Verfahren nach einem oder mehreren der vorhergehenden Ansprüche, **dadurch gekennzeichnet, dass** die Quelle der Daten des Ausgabekanals (3) durch einen zwischen Quelle und Benutzer vereinbarten geheimen Code (6) identifizierbar ist

10. Verfahren nach einem oder mehreren der vorhergehenden Ansprüche, **dadurch gekennzeichnet, dass** der geheime Code (6) bei jeder Anzeige von Daten der Quelle auf dem Display (3) erscheint.

11. Anordnung zur Absicherung eines Mensch-Maschine-Dialogs, umfassend ein Endgerät mit Eingabekanälen und Ausgabekanälen, mindestens eine auf dem Endgerät ausführbare Anwendung, welche zur Dialogführung mit einem Benutzer über die Eingabekanäle und Ausgabekanäle kommuniziert,
**dadurch gekennzeichnet,**
**dass** das Endgerät (1) eine Umschalteinrichtung (11 ) umfasst, mittels der die Eingabekanäle (4) und/oder Ausgabekanäle (3) des Endgerätes, zusammen oder getrennt, wahlweise so schaltbar sind, dass sie einer Anwendung (8; 9; 10) exklusiv zur Verfügung stehen, wobei die Eingabe-/Ausgabekanäle (3, 4) nur einer Anwendung (8; 9; 10) zur Zeit exklusiv zugeordnet sind.

12. Anordnung nach Anspruch 11, **dadurch gekennzeichnet, dass** die Umschalteinrichtung (11 ) einen mechanischen, elektronischen oder softwaregesteuerten Schalter umfasst.

13. Anordnung nach einem der Ansprüche 11 oder 12, **dadurch gekennzeichnet, dass** die Eingabekanäle (4) und Ausgabekanäle (3) durch eine Tastatur und ein Display des Endgeräts gebildet sind.

14. Anordnung nach einem oder mehreren der Ansprüche 11 bis 13, **dadurch gekennzeichnet, dass** die Anwendung (10) eine Signiervorrichtung ist.

15. Anordnung nach einem oder mehreren der Ansprüche 11 bis 14, **dadurch gekennzeichnet, dass** die Signiervorrichtung (10) im Endgerät (1) oder einer mit dem Endgerät verwendbaren Chipkarte enthalten ist.

## Claims

1. Method for protection of a man-machine dialogue between a user and at least one application which can be executed on a terminal, wherein a communication between user and application takes place via input channels and output channels of the terminal, **characterised in that** the input channels (4) and/or output channels (3) of the terminal (1), together or separately, can optionally be switched by means of a switchover device in the terminal in such a way that they are exclusively available to one application (8; 9; 10), the input/output channels (3, 4) being exclusively allocated to only one application (8; 9; 10) at a time.

2. Method according to claim 1, **characterised in that** various applications (8; 9; 10) can be exclusively coupled to the input/output channels (3, 4) alternatively in each case.

3. Method according to one or more of the preceding claims, **characterised in that** the switchover is carried out mechanically, electronically or by means of software.

4. Method according to one or more of the preceding claims, **characterised in that** the switchover is activatable by a defined key (5) at the terminal (1) or an input code.

5. Method according to one or more of the preceding claims, **characterised in that** the switchover is done manually by the user or automatically by the terminal (1).

6. Method according to one or more of the preceding claims, **characterised in that** switchover to a specific application (8; 9; 10) is clearly displayed to the user by an optical and/or acoustic signal (12).

7. Method according to one or more of the preceding claims, **characterised in that** a specific application (8; 9; 10) is started simultaneously with the switchover.

8. Method according to one or more of the preceding claims, **characterised in that** the application (10) is a signing device present in a smart card which can be used with the terminal or in the terminal (1) itself.

9. Method according to one or more of the preceding claims, **characterised in that** the source of the data of the output channel (3) can be identified by a secret code (6) agreed between source and user.

10. Method according to one or more of the preceding claims, **characterised in that** the secret code (6) appears on the display (3) with each display of data of the source.

11. Arrangement for protection of a man-machine dialogue, comprising a terminal with input channels and output channels, at least one application which can be executed on the terminal and communicates with a user via the input channels and output channels for conducting dialogue, **characterised in that** the terminal (1) comprises a switchover device (11) by means of which the input channels (4) and/or output channels (3) of the terminal, together or separately, can optionally be switched in such a way that they are exclusively available to one application (8; 9; 10), the input/output channels (3, 4) being exclusively allocated to only one application (8; 9; 10) at a time.

12. Arrangement according to claim 11, **characterised in that** the switchover device (11) comprises a mechanical, electronic or software-controlled switch.

13. Arrangement according to one of claims 11 or 12, **characterised in that** the input channels (4) and output channels (3) are formed by a keyboard and a display of the terminal.

14. Arrangement according to one or more of claims 11 to 13, **characterised in that** the application (10) is a signing device.

15. Arrangement according to one or more of claims 11 to 14, **characterised in that** the signing device (10) is contained in the terminal (1) or a smart card which can be used with the terminal.

## Revendications

1. Procédé pour sécuriser un dialogue homme-machine entre un utilisateur et au moins une application exécutable sur un terminal, une communication ayant lieu entre l'utilisateur et l'application grâce à des canaux d'entrée et des canaux de sortie du terminal,
**caractérisé en ce que** les canaux d'entrée (4) et/ou les canaux de sortie (3) du terminal (1) sont aptes à être commutés sélectivement, ensemble ou séparément, grâce à un dispositif de commutation prévu dans le terminal, de manière à être exclusivement à la disposition d'une application (8 ; 9 ; 10), les canaux d'entrée/sortie (3, 4) étant affectés exclusivement, dans le temps, à une seule application (8 ; 9 ; 10).

2. Procédé selon la revendication 1, **caractérisé en ce que** différentes applications (8 ; 9 ; 10) sont aptes à être couplées exclusivement aux canaux d'entrée/sortie (3, 4), en alternance.

3. Procédé selon l'une au moins des revendications précédentes, **caractérisé en ce que** la commutation est réalisée mécaniquement, électroniquement ou à l'aide d'un logiciel.

4. Procédé selon l'une au moins des revendications précédentes, **caractérisé en ce que** la commutation est apte à être activée à l'aide d'une touche définie (5) du terminal (1), ou d'un code d'entrée.

5. Procédé selon l'une au moins des revendications précédentes, **caractérisé en ce que** la commutation est réalisée manuellement par l'utilisateur ou automatiquement grâce au terminal (1).

6. Procédé selon l'une au moins des revendications précédentes, **caractérisé en ce que** la commutation vers une application définie (8 ; 9 ; 10) est indiquée clairement à l'utilisateur grâce à un signal optique et/ou acoustique (12) .

7. Procédé selon l'une au moins des revendications précédentes, **caractérisé en ce qu'**une application définie (8 ; 9 ; 10) est démarrée en même temps que la commutation.

8. Procédé selon l'une au moins des revendications précédentes, **caractérisé en ce que** l'application (10) consiste en un dispositif de signature qui est prévu dans une carte à puce utilisable avec le terminal, ou dans le terminal (1) lui-même.

9. Procédé selon l'une au moins des revendications précédentes, **caractérisé en ce que** la source des données du canal de sortie (3) est apte à être identifiée grâce à un code secret (6) dont il a été convenu entre la source et l'utilisateur.

10. Procédé selon l'une au moins des revendications précédentes, **caractérisé en ce que** le code secret (6) apparaît à chaque affichage des données de la source sur l'affichage (3) .

11. Dispositif pour sécuriser un dialogue homme-machine, comprenant un terminal avec des canaux d'entrée et des canaux de sortie, et au moins une application qui est exécutable sur le terminal et qui communique, en vue du dialogue, avec un utilisateur par l'intermédiaire des canaux d'entrée et des canaux de sortie,
**caractérisé en ce que** le terminal (1) comprend un dispositif de commutation (11) à l'aide duquel les canaux d'entrée (4) et/ou les canaux de sortie (3) du terminal (1) sont aptes à être commutés sélectivement, ensemble ou séparément, de manière à être exclusivement à la disposition d'une application (8 ; 9 ; 10), les canaux d'entrée/sortie (3, 4) étant affectés exclusivement, dans le temps, à une seule application (8 ; 9 ; 10).

12. Dispositif selon la revendication 11, **caractérisé en ce que** le dispositif de commutation (11) comprend un commutateur mécanique, électronique ou commandé par logiciel.

13. Dispositif selon la revendication 11 ou 12, **caractérisé en ce que** les canaux d'entrée (4) et les canaux de sortie (3) sont formés par un clavier et un affichage du terminal.

14. Dispositif selon l'une au moins des revendications 11 à 13, **caractérisé en ce que** l'application (10) est constituée par un dispositif de signature.

15. Dispositif selon l'une au moins des revendications 11 à 14, **caractérisé en ce que** le dispositif de signature (10) est contenu dans le terminal (1) ou dans une carte à puce utilisable avec le terminal.
